# FASCICULE DE BREVET EUROPEEN

(11) **EP 0 631 140 B1**
(45) Date de publication et mention de la délivrance du brevet: **24.03.1999**
(21) Numéro de dépôt: 94401301.0
(22) Date de dépôt: 10.06.1994
(51) Int. Cl.: G01P 3/44

(54) **Roulement à capteur d'informations intégré**
Lager mit integriertem Messwertaufnehmer
Bearing with integrated sensor

(30) Priorité: 25.06.1993 FR 9307745
(43) Date de publication de la demande: 28.12.1994
(73) Titulaire: S.N.R. ROULEMENTS, 74010 Annecy Cédex (FR)
(72) Inventeur: Sonnerat, Claude, F-74940 Annecy le Vieux (FR); Hajzler, Christian, F-74000 Annecy (FR); Alff, Denis, F-74000 Annecy (FR)
(74) Mandataire: Ernst-Schonberg, Michel

(56) Documents cités:
- EP-A- 0 495 323
- EP-A- 0 520 853
- EP-A- 0 546 918
- FR-A- 2 649 457

## Description

L'invention concerne un roulement à capteur d'informations intégré qui possède une sortie perfectionnée du câble d'alimentation et de transmission du signal délivré par ledit capteur, qui transforme un paramètre de fonctionnement du roulement en un tel signal.

L'invention concerne plus particulièrement un roulement à capteur d'informations intégré qui possède une bague fixe, une bague tournante, des corps roulants au contact desdites bagues, un moyen codeur monté sur la bague tournante, un joint d'étanchéité monté sur la bague fixe, un moyen capteur porté par ledit joint et un manchon de protection du câble solidaire dudit joint conformément au préambule de la revendication indépendante.

La publication EP-A-0 520 853 décrit un roulement à capteur d'informations intégré conforme au préambule de la revendication indépendante qui possède une sortie axiale du câble d'alimentation et de transmission du signal délivré par le capteur.

Un tel agencement peut se révéler par ailleurs encombrant axialement, ce qui rend difficile les applications utilisant une pièce adjacente tournant près de la sortie de câble, et ne facilite pas le conditionnement d'un tel roulement, ni le montage du joint sur la bague fixe.

La publication FR-A-2 649 457 décrit un roulement à capteur d'informations intégré dans lequel la bague intérieure porte un support du câble , porté sur le diamètre extérieur de ladite bague.

Cette disposition ne permet pas l'obtention de certaines applications du roulement à capteur d'informations intégré qui nécessitent de disposer d'un appui libre sur la périphérie et les faces de la bague extérieure.

La publication EP-A-495323 décrit un anneau porte-capteur destiné à être monté sur la bague fixe du roulement conjointement avec une garniture d'étanchéité. Une telle disposition permet le montage simultané de la garniture d'étanchéité et du porte-capteur sous réserve que la bague fixe du roulement possède un usinage de montage d'adaptation de l'anneau porte-capteur.

L'invention a pour objet un roulement à capteur d'informations intégré dont le joint d'étanchéité porte un manchon de sortie du câble de faible encombrement, notamment dans le but de faciliter son adaptation à des montages existants ainsi que le conditionnement de tels roulements.

L'invention a également pour objet un roulement dont le câble s'étend le long du flanc du joint d'étanchéité de sorte qu'il laisse accessible la face de la bague extérieure pour une éventuelle immobilisation axiale du roulement ou pour la mise en oeuvre d'un outil de montage de l'ensemble du roulement.

L'invention a encore pour objet un roulement qui facilite le montage du joint d'étanchéité porteur du capteur dans la bague extérieure de roulement, en laissant un appui facial circulaire proche de la périphérie du joint d'étanchéité.

L'invention a encore pour objet de permettre le positionnement d'éléments électroniques à proximité de l'élément capteur, notamment dans le but de traiter le signal du capteur.

Les différents objets de l'invention trouvent une solution conformément à la caractéristique de la revendication indépendante.

D'autres avantages et caractéristiques de l'invention apparaîtront à la lecture d'un exemple de réalisation du roulement à capteur d'informations intégré en référence au dessin annexé dans lequel :
- la figure 1 est une perspective partielle en coupe axiale d'un roulement à capteur d'informations intégré, qui ne fait pas partie de l'invention
- la figure 2 est une vue de face de la face extérieure du joint d'étanchéité selon la Figure 1
- la figure 3 est une vue de face de la face extérieure du joint d'étanchéité selon une variante de la figure 2,
- la figure 4 est une vue de face de la face extérieure du joint d'étanchéité selon un premier mode de réalisation de l'invention,
- la figure 5 est une section du détail V de la figure 4,
- la figure 6 est une vue de face partielle de la face extérieure d'un joint d'étanchéité qui ne fait pas partie de l'invention
- la figure 7 est une vue de face de la face extérieure du joint d'étanchéité selon un deuxième mode de réalisation de l'invention,
- la figure 8 est une section du détail VIII de la figure 7.

Dans la suite de la description, les parties identiques ou équivalentes des roulements intégrés illustrés sur les figures porteront les mêmes numéros de référence.

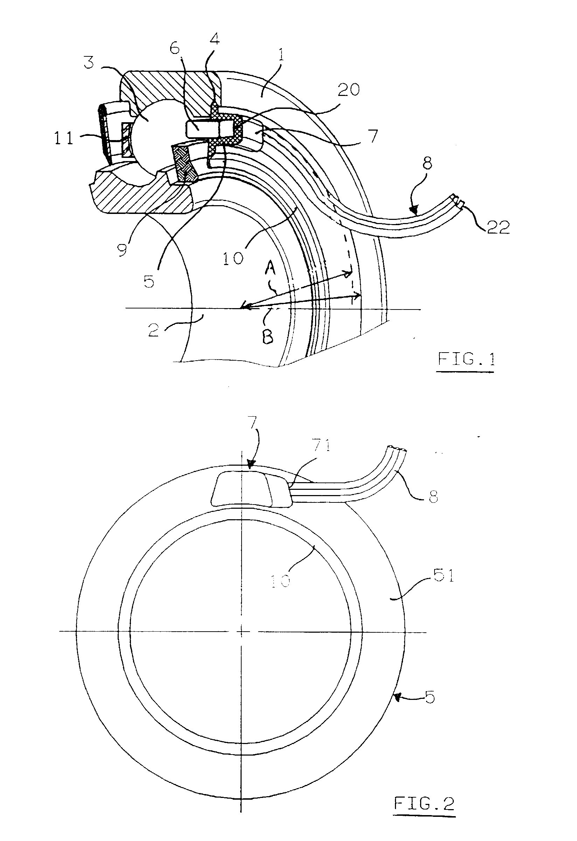

Selon la figure 1, le roulement à capteur d'informations intégré possède une bague fixe 1, une bague tournante 2, des corps roulants 3 au contact desdites bagues 1 et 2.

La bague fixe 1 possède une gorge de réception 4 d'un joint d'étanchéité 5 sur lequel sont montés un moyen capteur 6 connu en soi et à titre d'exemple une sonde du type à effet Hall, et un manchon de protection 7 du câble 8 solidaire du joint d'étanchéité 5.

La bague tournante 2 porte un moyen codeur 9, tel qu'un anneau magnétique multipolaire.
Cet anneau magnétique 9 est en contact avec une lèvre souple 10 portée par le joint d'étanchéité 5 qui assure une étanchéité dynamique du roulement.

Les bagues 1 et 2 possèdent également des chemins de roulement pour les corps roulants 3 disposés dans une cage 11 qui en assure la retenue et le positionnement angulaire.

Le manchon 7 possède une gorge de réception 20 de la sonde 6 connectée au câble 8.
Ainsi le manchon 7 est à la fois une protection du câble 8 et en particulier de sa connexion avec la sonde 6, et une protection de la sonde 6 elle-même.

Par ailleurs la distance radiale A du manchon 7 par rapport à l'axe de rotation du roulement, représentée à la figure 1, est :
- soit inférieure au rayon intérieur B de la bague fixe 1 dans le but de faciliter le montage du joint 5 porteur du moyen capteur 6 sur la bague fixe 1 de roulement à l'aide d'un outil,
- soit sensiblement égale au rayon intérieur B de la bague fixe 1 de sorte que la paroi extérieure 73 du manchon 7 parallèle aux faces du roulement, puisse servir d'appui à un outil de montage du joint 5 sur ladite bague fixe 1.

Le manchon 7 possède également une paroi d'extrémité 71 sensiblement perpendiculaire à la face extérieure 51 du joint 5, à travers laquelle débouche le câble 8 de sorte que ce dernier soit tangent à ladite face extérieure 51 du joint 5.

Ce câble 8 possède une section rectangulaire et est constitué de conducteurs 21 répartis le long d'un côté du rectangle défini par ladite section de sorte que le câble soit plat.

Cette disposition des conducteurs 21 correspond à un encombrement minimal pour le roulement, cependant un câble dont la section serait de toute autre forme pourrait également convenir.

Deux côtés opposés de la section du câble 8 sont perpendiculaires à la face extérieure 51 du joint d'étanchéité 5.

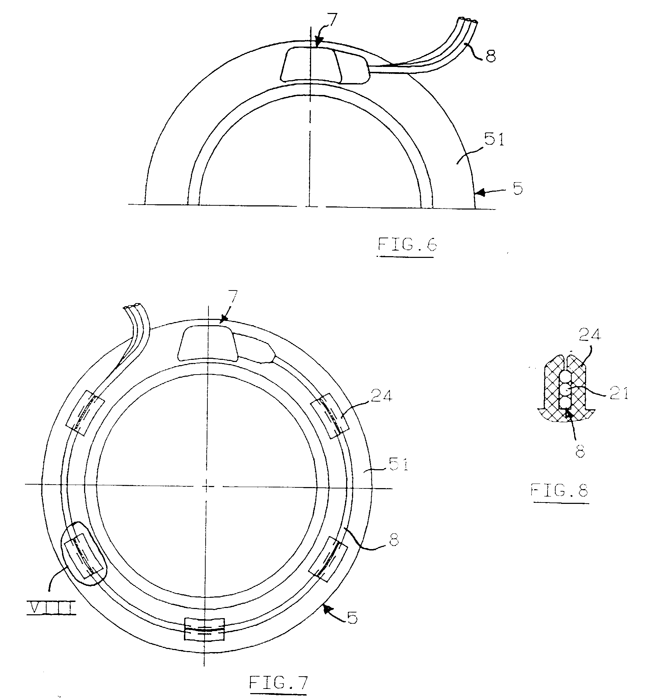

On désignera dans la suite de la description par "côté plat" 22 le côté de la section du câble 8 de plus faible épaisseur. Ce dernier est :
- soit perpendiculaire à la face extérieure 51 du joint d'étanchéité 5 selon un premier mode de réalisation de l'invention représenté aux figures 2 à 5,
- soit parallèle à la face extérieure 51 du joint d'étanchéité 5 selon un second mode de réalisation de l'invention représenté aux figures 6 à 8.

Selon la figure 2, la paroi d'extrémité 71 du manchon 7 s'arrête sur le câble 8 juste après la connexion avec la sonde 6 de sorte que la protection du manchon 7 est limitée à la sonde 6 et à sa connexion avec le câble 8.

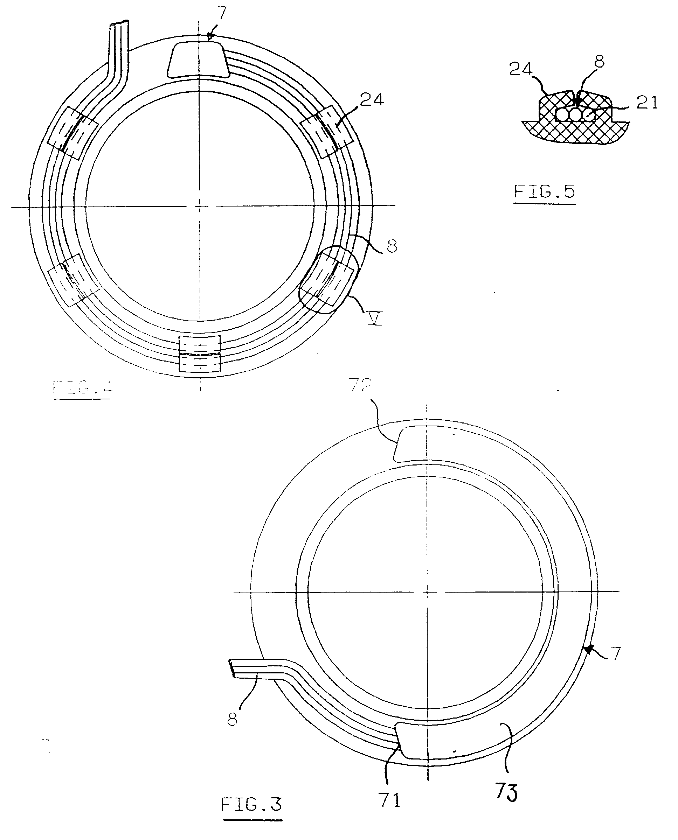

Selon une variante représentée à la figure 3, les parois d'extrémités 71 et 72 du manchon 7 le long de la face extérieure 51 du joint d'étanchéité 5 sont angulairement décalées dans le but d'augmenter la tenue du câble 8 dans le joint d'étanchéité 5.

Dans une telle variante, le manchon 7 peut renfermer un circuit électronique non représenté.

Selon un premier mode de réalisation de l'invention représenté aux figures 4 et 5, le joint d'étanchéité 5 porte des moyens de retenue 24, tels que des pinces de serrage, du câble 8 disposés sur la face extérieure 51 dudit joint 5.

Ces pinces de serrage 24 espacées régulièrement sur la face extérieure 51 de joint d'étanchéité 5 permettent un maintien provisoire du câble 8 notamment lors du montage dudit joint 5 dans la bague fixe 1, ou lors du conditionnement ou du transport du roulement.

Cette description peut être aisément transposée au second mode de réalisation de l'invention, tel que représenté aux figures 7 à 8.

## Revendications

1. Roulement à capteur d'informations intégré qui possède une bague fixe (1), une bague tournante (2), des corps roulants (3) au contact desdites bagues (1, 2), un moyen codeur (9) monté sur la bague tournante (2), un joint d'étanchéité (5) monté sur la bague fixe (1), un moyen capteur (6) porté par ledit joint (5) et un manchon (7) de protection du câble (8) solidaire dudit joint (5), caractérisé par le fait que le manchon (7) possède une gorge de réception (20) du moyen capteur (6) connecté au câble (8) et que ledit manchon (7) possède une paroi d'extrémité (71) sensiblement perpendiculaire à la face frontale extérieure (51) du joint (5), au travers de laquelle débouche le câble (8) sensiblement dans le plan de ladite face frontale extérieure (51) du joint (5) au contact de laquelle il est retenu par des moyens (24) disposés sur ladite face frontale (51).

2. Roulement selon la revendication 1, caractérisé par le fait que les parois d'extrémité (71, 72) du manchon (7) le long de la face extérieure (51) du joint (5) sont angulairement décalées.

3. Roulement selon l'une quelconque des revendications 1 ou 2, caractérisé par le fait que la section du câble (8) est de manière connue en soi rectangulaire et que les conducteurs de celui-ci sont répartis le long d'un côté du rectangle défini par ladite section.

## Patentansprüche

1. Lager mit integriertem Messwertaufnehmer, das einen feststehenden Ring (1), einen sich drehenden Ring (2), Rollkörper (3), die mit den Ringen (1, 2) in Kontakt stehen, eine Codieranordnung (9) am sich drehenden Ring (2), eine Dichtung (5) am feststehenden Ring (1), einen von der Dichtung (5) getragenen Fühler (6) und eine Schutzmanschette (7) für ein mit der Dichtung (5) verbundenes Kabel (8) aufweist, dadurch gekennzeichnet, dass die Manschette (7) eine Aufnahmenut (20) für den mit dem Kabel (8) verbundenen Fühler (6) aufweist und dass die Manschette (7) eine Endwand (71) aufweist, die im wesentlichen senkrecht zur äusseren Vorderseite (51) der Dichtung (5) verläuft und die vom Kabel (8) durchsetzt wird, das in der Ebene der äusseren Vorderseite (51) der Dichtung (5) mündet und das dort durch eine in der Vorderseite (51) angeordnete Vorrichtung (24) gehalten wird.

2. Lager nach Anspruch 1, dadurch gekennzeichnet, dass die Endwände (71, 72) der Manschette (7) entlang der Aussenfläche (51) der Dichtung (5) winkelmässig zueinander verschoben sind.

3. Lager nach einem der Ansprüche 1 oder 2, dadurch gekennzeichnet, dass der Querschnitt des Kabels (8) in an und für sich bekannter Weise rechtwinklig ist und dass seine Leiter entlang einer Seite des durch den Querschnitt gebildeten Rechtecks angeordnet sind.

## Claims

1. A bearing with an integrated data sensor which has a fixed ring (1), a rotating ring (2), rolling bodies (3) in contact with said rings (1. 2), an encoding means (9) mounted on the rotating ring (2), a gasket (5) mounted on the fixed ring (1), a sensor means (6) carried by said gasket (5) and a sleeve (7) for protecting the cable (8) integral with said gasket (5), characterised by the fact that the sleeve (7) is provided with a throat (20) for receiving the sensor means (6) connected to the cable (8) and that said sleeve (7) is provided with an end wall (71) substantially perpendicular to the exterior frontal face (51) of the gasket (5), across which the cable (8) comes out substantially in the plane of said exterior frontal face (51) of the gasket (5), with which it is kept in contact by means (24) arranged on said frontal face (51).

2. Bearing according to claim 1, characterised by the fact that the end walls (71, 72) of the sleeve (7) along the exterior face (51) of the gasket (5) are angularly offset.

3. Bearing according to any one of claims 1 or 2, characterised by the fact that the section of the cable (8) is rectangular in a manner known per se, and that the conductors thereof are distributed along one side of the rectangle defined by said section.
